# EUROPEAN PATENT APPLICATION

(11) **EP 4 779 044 A1**
(43) Date of publication of application: **22.07.2026**
(21) Application number: 24901746.8
(22) Date of filing: 24.05.2024
(51) Int. Cl.: C22C 9/06

(54) **CONTACT TIP FOR WELDING**

(71) Applicant: Shinkokiki Co., Ltd., Nagoya-shi Aichi 452-0822 (JP)
(72) Inventor: FUKIZAWA, Takeo, Nagoya-shi, Aichi 452-0822 (JP)
(74) Representative: Mewburn Ellis LLP
(86) International application number: PCT/JP2024/019200
(87) International publication number: WO 2025/243508

(57) **Abstract**

In the welding contact tip of the present invention, the entire tip body is made of a copper alloy having a composition of Ni: 1.0 to 5.0%, Si: 0.4 to 2.0%, and a balance: Cu and unavoidable impurities in % by mass. It is possible to improve the service life so that the service life is 6 to 8 times longer than that of the conventional one while suppressing the manufacturing cost. The total quantity of unavoidable impurities is preferably 0.3% or less. In addition, it is particularly preferable that Ni is in a range of 2.0 to 4.0% and Si is in a range of 0.8 to 1.5%.

## Description

### TECHNICAL FIELD

The present invention relates to a welding contact tip that guides a welding wire and supplies a welding current to the welding wire.

### BACKGROUND ART

The welding contact tip has a wire insertion hole in a central portion of a rod-shaped tip body made of a copper alloy having excellent conductivity, and the welding wire is guided by the wire insertion hole and supplied with a welding current by contact with an inner wall face of the wire insertion hole. The distal end of the welding contact tip is exposed to a high temperature due to an arc, and is likely to wear due to contact with the welding wire, and the hole diameter is likely to increase, leading to deterioration of welding quality. For this reason, it is necessary to replace the welding contact tip every predetermined time, and during the time, the welding operation is required to be stopped.

Therefore, the welding contact tip is strongly required to have excellent wear resistance and a long service life, and various contrivances have been conventionally made. For example, Patent Literature 1 describes a welding contact tip in which a ceramic cylindrical body is fitted into a distal end of a wire insertion hole to improve wear resistance. Patent Literature 2 describes a welding contact tip in which a nickel boron plating film and a coating layer of a lubricant are formed on an outer face including an inner face of a wire insertion hole to improve wear resistance. However, since these require special processing, there is a problem that the manufacturing cost increases.

For this reason, as disclosed in Patent Literature 3, the material of the copper alloy constituting the welding contact tip is devised. In Patent Literature 3, the hardness and conductivity of the welding contact tip are enhanced by containing 0.03 to 0.7% of silver in the copper alloy and performing drawing processing or cold working. However, since expensive silver is used, there is a problem that the manufacturing cost increases. Since the welding contact tip is a consumable, the user cannot ignore the cost issue.

In recent years, welding in which the positive phase and the negative phase of the welding current are periodically switched is the mainstream, and in this case, the diameter of the distal end hole of the wire insertion hole is more easily enlarged.

### CITATION LIST

Patent Literature 1: JP 1998-193122 A
Patent Literature 2: JP 2017-189816 A
Patent Literature 3: JP 2009-90355 A

### SUMMARY OF INVENTION

### TECHNICAL PROBLEMS

An object of the present invention is to solve the above-described conventional problems, and to provide a welding contact tip in which the service life is dramatically improved as compared with the conventional one while suppressing the manufacturing cost.

### SOLUTION TO PROBLEMS

In the welding contact tip of the present invention made to solve the above problems, the entire tip body is made of a copper alloy having a composition of Ni: 1.0 to 5.0%, Si: 0.4 to 2.0%, and a balance: Cu and unavoidable impurities in % by mass.

The total quantity of unavoidable impurities is preferably 0.3% or less. In addition, it is particularly preferable that Ni is in a range of 2.0 to 4.0% and Si is in a range of 0.8 to 1.5%.

### ADVANTAGEOUS EFFECTS OF INVENTION

In the welding contact tip of the present invention, by setting the content of Ni and Si to the above ranges, it is possible to achieve both conductivity and wear resistance in a well-balanced manner, and as a result, it has succeeded in dramatically improving the service life as compared with the conventional one while suppressing the manufacturing cost.

### BRIEF DESCRIPTION OF THE DRAWINGS

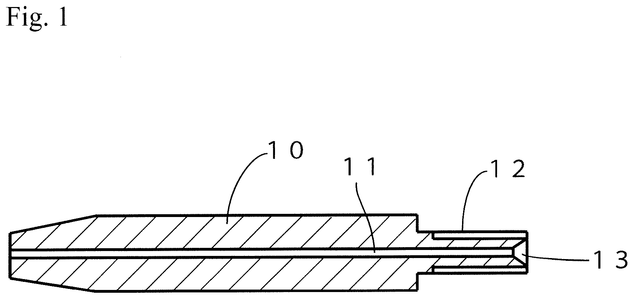

Fig. 1 is a cross-sectional view of a welding contact tip according to an embodiment.

### DESCRIPTION OF EMBODIMENTS

Hereinafter, the embodiment of the present invention will be described in detail.

Fig. 1 is a cross-sectional view illustrating an example of a welding contact tip, in which an insertion hole 11 for a welding wire is formed at the center of a cylindrical tip body 10, and an external thread portion 12 is formed at the rear end. A tapered wire introduction portion 13 is provided at a rear end of the insertion hole 11. The entire tip body 10 is made of a copper alloy having a composition of Ni: 1.0 to 5.0%, Si: 0.4 to 2.0%, and a balance: Cu and unavoidable impurities.

Ni is a component that contributes to improvement of wear resistance because Ni is easily alloyed with copper and has higher hardness than copper. In addition, Si can also act as a surfactant to promote bonding between metals, and is a component that contributes to improvement of wear resistance because of its higher hardness than that of copper. Therefore, the welding contact tip of the present invention made of a copper alloy containing Ni and Si can suppress damage due to wear and extend the service life in welding with a high wire feed speed or welding with large wear.

On the other hand, Ni and Si have lower conductivity than copper. Therefore, when the content thereof is increased, the conductivity of the welding contact tip is decreased, leading to seizure of the contact tip due to an increase in the amount of heat generation and deterioration of welding quality. Further, since Si is inferior in heat resistance to copper, when the content of Si is increased, the welding contact tip may be softened by high temperature or may be dissolved.

As described above, Ni and Si are components contributing to improvement of wear resistance, but are also components inhibiting conductivity and heat resistance. Therefore, as a result of repeating the experiment, the present inventor has determined that the composition of Ni: 1.0 to 5.0%, Si: 0.4 to 2.0%, and a balance: Cu and unavoidable impurities is the most balanced composition as a welding contact tip.

That is, when Ni is in a range of less than 1.0%, hardness decreases, and when Ni is in a range of more than 5.0%, hardness increases, but conductivity and heat resistance decrease. Similarly, when Si is in a range of less than 0.4%, hardness decreases, and when Si is in a range of more than 2.0%, conductivity and heat resistance decrease. Specifically, it is the most preferable that Ni is in a range of 2.0 to 4.0% and Si is in a range of 0.8 to 1.5% at the center of the above ranges.

Incidentally, the copper alloy contains a small quantity of unavoidable impurities, but since these are components that inhibit conductivity, the total quantity thereof is preferably 0.3% or less. In addition, there is a copper alloy in which hardness is increased by adding a hard metal such as chromium or cobalt, but any of these causes a decrease in conductivity and causes an increase in cost, and thus is considered to be not preferable as a material of the welding contact tip.

The results of experiments performed in order to check the performance of the present invention are shown below.

A welding contact tip was manufactured from a wire rod of a copper alloy in which the compositions of Ni and Si were changed as shown in Table 1. For comparison, a conventionally generally used contact tip made of chromium copper and a contact tip made of silver-containing copper shown in Patent Literature 3 were prepared, and these were set in the machine, and arc welding for periodically switching the positive phase and the reverse phase of the welding current was performed to collect data of the service life. The content in Table 1 is represented by % by mass, and the balance includes copper and unavoidable impurities.

In the measurement of the service life, a stainless wire was used as a welding wire, and the service life of a chromium-copper contact tip was used as a standard, and the equivalent was evaluated as ∘, the equivalent or less was evaluated as ×, and the equivalent or more was evaluated as ⊚. Note that the service life of the contact tips of Nos. 2, 3, and 6, which are the products of the present invention, was 6 to 8 times that of the standard product, and was dramatically longer than that of the conventional product. It has been confirmed that the service life of the welding contact tips of Nos. 2, 3, and 6 is 6 to 8 times that of the standard product even when a non-plated wire and a plated wire are used as a welding wire. The evaluation results are shown in Table 1.

**[Table 1]**

| No. | Ni | Si | Others | Remarks | Hardness | Heat resistance | Conduct ivity | Service life | Cost | Overall evaluation |
|---|---|---|---|---|---|---|---|---|---|---|
| 1 | 0.5 | 0.2 | 0 | Ni, Si deficiency | × | × | ⊚ | × | × | × |
| 2 | 1.0 | 0.9 | 0 | Present invention | ⊚ | ⊚ | ⊚ | ⊚ | ⊚ | ⊚ |
| 3 | 3.0 | 0.9 | 0 | Present invention | ⊚ | ⊚ | ⊚ | ⊚ | ⊚ | ⊚ |
| 4 | 3.0 | 0.2 | 0 | Si deficiency | ○ | ○ | ⊚ | ○ | ⊚ | ○ |
| 5 | 4.0 | 4.0 | 0 | Si excess | ⊚ | × | × | × | ⊚ | × |
| 6 | 5.0 | 2.0 | 0 | Present invention | ⊚ | ⊚ | ⊚ | ⊚ | ⊚ | ⊚ |
| 7 | 8.0 | 1.0 | 0 | Ni excess | ⊚ | ⊚ | × | ○ | ⊚ | × |
| 8 | 0 | 0 | Cr:1 | Chromium copper | ○ | ○ | ○ | ○ | ⊚ | ○ Standard |
| 9 | 0 | 0 | Ag:0.5 | Silver-containing copper | ○ | ○ | ⊚ | ○ | × | × |

As shown in Table 1, the welding contact tips of No. 2, No. 3, and No. 6, which are the present invention products, have excellent conductivity, low cost, and dramatically improved service life as compared with conventional welding contact tips made of chromium copper.

The welding contact tip of No. 1 had low content of Ni and Si, and was evaluated as × in each evaluation item other than conductivity. No. 4 had low content of Si, and thus the service life was equivalent to that of No. 8 which is a standard product. No. 5 had excessive content of Si, and thus heat resistance and conductivity were deteriorated. No. 7 had excessive content of Ni, and thus the conductivity was deteriorated. The contact tip made of silver-containing copper of No. 9 has performance equal to or higher than that of the standard product, but the cost increases. In addition, No. 5 and No. 7 had high content of Ni and Si, and there was a tendency that sputtering deposit was likely to adhere.

As described above, the welding contact tip according to the present invention of the present invention can achieve both conductivity and wear resistance in a well-balanced manner, and as a result, is excellent in practicality since the tip can dramatically improve the service life so that the service life is 6 to 8 times longer than that the conventional product, while suppressing the manufacturing cost.

### REFERENCE SIGNS LIST

- 10: tip body
- 11: insertion hole of welding wire
- 12: external thread portion
- 13: wire introduction portion

## Claims

1. A welding contact tip, wherein an entire tip body is made of a copper alloy having a composition of Ni: 1.0 to 5.0%, Si: 0.4 to 2.0%, and a balance: Cu and unavoidable impurities in % by mass.

2. The welding contact tip according to claim 1, wherein a total quantity of unavoidable impurities is 0.3% or less.

3. The welding contact tip according to claim 1, wherein Ni is in a range of 2.0 to 4.0%, and Si is in a range of 0.8 to 1.5%.
